(19) **Europäisches Patentamt / European Patent Office / Office européen des brevets**

(11) **EP 3 935 898 B1**

(12) **FASCICULE DE BREVET EUROPEEN**

(45) Date de publication et mention de la délivrance du brevet:
**29.04.2026 Bulletin 2026/18**

(21) Numéro de dépôt: **20725804.7**

(22) Date de dépôt: **02.03.2020**

(51) Classification Internationale des Brevets (IPC):
***H04W 72/02*** *(2009.01)*

(52) Classification Coopérative des Brevets (CPC):
**H04W 72/02**

(86) Numéro de dépôt international:
**PCT/FR2020/050412**

(87) Numéro de publication internationale:
**WO 2020/178514 (10.09.2020 Gazette 2020/37)**

(54) **PROCÉDÉ DE SÉLECTION DES RESSOURCES TEMPS-FRÉQUENCE DESTINÉES À ÊTRE UTILISÉES PAR UN ÉQUIPEMENT RÉCEPTEUR APPARTENANT À UN GROUPE DE DIFFUSION POUR LA DIFFUSION DE MESSAGES, DISPOSITIFS ET PROGRAMMES D'ORDINATEURS CORRESPONDANTS**

VERFAHREN ZUR AUSWAHL VON ZEIT-FREQUENZ-RESSOURCEN, DIE DAZU BESTIMMT SIND, VON EINER EMPFÄNGERVORRICHTUNG VERWENDET ZU WERDEN, DIE ZU EINER RUNDFUNKGRUPPE FÜR RUNDFUNKNACHRICHTEN GEHÖRT, ENTSPRECHENDE VORRICHTUNGEN UND COMPUTERPROGRAMME

METHOD FOR SELECTING TIME-FREQUENCY RESOURCES INTENDED TO BE USED BY A RECEIVER DEVICE BELONGING TO A BROADCAST GROUP FOR BROADCASTING MESSAGES, CORRESPONDING APPARATUSES AND COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.03.2019 FR 1902247**

(43) Date de publication de la demande:
**12.01.2022 Bulletin 2022/02**

(73) Titulaire: **Orange**
**92130 Issy-les-Moulineaux (FR)**

(72) Inventeur: **LIN, Hao**
**92326 CHÂTILLON CEDEX (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A1-2019/022480**

• **VUKADINOVIC VLADIMIR ET AL: "3GPP C-V2X and IEEE 802.11p for Vehicle-to-Vehicle communications in highway platooning scenarios", AD HOC NETWORKS, ELSEVIER, AMSTERDAM, NL, vol. 74, 15 March 2018 (2018-03-15), pages 17 - 29, XP085376743, ISSN: 1570-8705, DOI: 10.1016/J.ADHOC.2018.03.004**

## Description

**Domaine de l'invention**

L'invention concerne un procédé de diffusion d'au moins un message, un procédé de réception d'au moins un message, un procédé d'émission d'au moins un premier message, un équipement émetteur, un équipement récepteur, une station de base et un produit programme d'ordinateur.

**Art antérieur et ses inconvénients**

La diffusion de données dans le cadre du V2X consiste en un transfert d'informations depuis un équipement de communication embarqué dans un véhicule à destination d'au moins un autre équipement de communication associé à ou embarqué dans une entité susceptible d'affecter le véhicule, et inversement. Le V2X définit un système de communication véhiculaire intégrant d'autres types de communication plus spécifiques, tels que V2I (véhicule à infrastructure), V2N (véhicule à réseau), V2V (véhicule à véhicule), V2P (véhicule à piéton), etc.

Un tel mode de communication est notamment intéressant dans le cadre d'un groupement de véhicules par pelotons (*platooning*[1])*,* ou convoi routier circulant dans un système routier automatisé.

Les pelotons de véhicules permettent de raccourcir les distances entre les véhicules le constituant grâce à la communication V2X. Cette capacité permet par exemple aux véhicules du peloton d'accélérer ou freiner à l'unisson. Ainsi, un peloton de véhicules électroniquement enchaînés avancerait comme un seul bloc.

Un premier équipement de communication embarqué dans un premier véhicule est un équipement émetteur diffusant des données à destination d'autres équipements récepteurs embarqués dans d'autres véhicules. L'équipement émetteur diffuse des données au travers d'un canal de communication appelé *"sidelink"* ou SL dans les spécifications du 3GPP RAN (*Third Generation Partnership Project Radio Access Network).*

L'équipement émetteur diffuse des messages de type CAM (*Cooperative Awareness Message* ou message de sensibilisation en français) de manière périodique afin de maintenir les différents véhicules constituant le peloton informés, par exemple, de la position des véhicules ou de leur état.

Afin de pouvoir diffuser de tels messages de type CAM, l'équipement émetteur vérifie régulièrement si des ressources temps-fréquence d'un signal radio utilisé pour diffuser les données au travers d'un canal de transmission sont utilisées ou non pour diffuser des données. Une fois que l'équipement émetteur a détecté une ou plusieurs ressources temps-fréquence disponibles, il les sélectionne et les utilise pour diffuser des messages de type CAM. Ainsi, l'équipement émetteur diffuse de manière périodique des messages de type CAM en utilisant à chaque fois les mêmes ressources temps-fréquence qu'il a sélectionnées. Un compteur est décrémenté à chaque diffusion d'un message de type CAM par l'équipement émetteur de sorte que lorsque le compteur est à zéro, l'équipement émetteur libère les ressources temps-fréquence sélectionnées et vérifie de nouveau si des ressources temps-fréquence d'un signal radio utilisé pour diffuser les données au travers d'un canal de transmission sont utilisées ou non pour diffuser des données.

La durée nécessaire à l'équipement émetteur pour écouter toutes les ressources temps-fréquence est de l'ordre de la seconde.

Une telle durée d'écoute représente un inconvénient pour des services nécessitant un temps de latence court, tels que des services nécessitant la diffusion de messages apériodiques.

Il existe donc un besoin d'une solution de diffusion de données entre un équipement émetteur et des équipements récepteurs appartenant à un même groupe de diffusion ne présentant pas tout ou partie des inconvénients précités. Un exemple est connu dans le document WO 2019/022480 A1.

**Exposé de l'invention**

L'invention est définie dans les revendications annexées.

Une telle solution permet à un équipement émetteur de sélectionner une ressource temps-fréquence à n'importe quel moment en fonction de ses besoins et sans avoir à vérifier régulièrement si des ressources temps-fréquence d'un signal radio utilisé pour diffuser les données au travers d'un canal de transmission sont utilisées ou non pour diffuser des données. Ainsi, le temps de latence s'en trouve fortement réduit.

Cela tient au fait que la station de base à laquelle sont attachés tous les équipements appartenant à un même groupe de diffusion divise un pool de ressources temps-fréquence en un nombre de ressources temps-fréquence déterminées. Les ressources temps-fréquence de ce pool de ressource temps-fréquence peuvent alors être choisies par l'équipement émetteur au besoin. Si l'équipement émetteur choisi une ressource temps-fréquence déjà utilisée, il suffit qu'il en choisisse une autre dans le pool de ressource temps-fréquence.

Les équipements appartenant au groupe de diffusion sont des équipements qui communiquent entre eux en mode bidirectionnel à l'alternat, ou half-duplex. En d'autres termes, un même équipement du groupe de diffusion ne peut pas simultanément recevoir des données émises par un autre équipement du groupe de diffusion et émettre des données à destination des autres équipements du groupe de diffusion.

Afin de prendre en compte cette spécificité des équipements du groupe de diffusion, l'équipement émetteur sélectionne au moins deux ressources temps-fréquence afin de diffuser le message dans chacune d'elles. Ceci permet de limiter le risque que le message diffusé par l'équipement émetteur ne soit pas reçu par des équipements récepteurs qui utiliseraient une des ressources temps-fréquence sélectionnées pour diffuser, lui aussi, un message au sein du groupe de diffusion.

Dans une première variante de réalisation du procédé de diffusion, une ressource temps-fréquence étant identifiée par un couple instant-fréquence, ledit sous-ensemble des ressources temps-fréquence comprend la première ressource temps-fréquence et au moins une deuxième ressource temps-fréquence identifiée par un instant distinct d'un instant identifiant la première ressource temps-fréquence sélectionnée.

Dans cette première variante de réalisation, la station de base divise le pool de ressources temps-fréquence en sous-ensembles de ressources temps-fréquence. Chaque sous-ensemble de ressources temps-fréquence comprend au moins deux ressources temps-fréquence. Les ressources temps-fréquence constituant un sous-ensemble de ressources temps-fréquence peuvent partager la même fréquence mais pas le même instant. Cette contrainte tient au fait que les équipements appartenant au groupe de diffusion sont des équipements qui communiquent entre eux en mode bidirectionnel à l'alternat. En sélectionnant la première ressource temps-fréquence, l'équipement émetteur est contraint de sélectionner les autres ressources temps-fréquence dans le même sous-ensemble de ressources temps-fréquence que celui auquel appartient la première ressource temps-fréquence identifiée.

Dans une deuxième variante de réalisation du procédé de diffusion, une ressource temps-fréquence étant identifiée par un couple instant-fréquence, ledit sous-ensemble des ressources temps-fréquence comprend au moins une deuxième ressource temps-fréquence identifiée par un instant distinct d'un instant identifiant la première ressource temps-fréquence sélectionnée.

Dans cette deuxième variante de réalisation, le sous-ensemble de ressources temps-fréquence comprend toutes les ressources temps-fréquence du pool de ressource temps-fréquence à l'exception de la ressource temps-fréquence sélectionnée et des ressources temps-fréquence identifiées par le même instant que la ressource temps-fréquence sélectionnée.

En offrant une plus grande souplesse dans la sélection des ressources temps-fréquence, cette variante de réalisation permet de réduire le risque de collision entre des équipements appartenant au groupe de diffusion. En d'autre terme, cette deuxième variante de réalisation permet de réduite le risque que deux équipements appartenant au groupe de diffusion sélectionnent une même ressource temps-fréquence au même moment.

Dans une troisième variante de réalisation du procédé de diffusion, le message diffusé à destination des équipements récepteurs du groupe de diffusion comprend des informations relatives aux ressources temps-fréquence utilisées pour la diffusion dudit message et des données destinées à être traitées par les équipements récepteurs du groupe de diffusion.

Cela permet aux équipements récepteurs du groupe de diffusion d'identifier les ressources temps-fréquence qui présentent un intérêt pour eux.

Dans une quatrième variante de réalisation du procédé de diffusion, les informations relatives aux ressources temps-fréquence utilisées pour la diffusion dudit message sont identiques lors de la première et de la deuxième diffusion dudit message et comprennent une chaine de bits identifiants les ressources temps-fréquence dudit pool de ressources temps-fréquence, la première ressource temps-fréquence et la deuxième ressource temps-fréquence sélectionnées sont représentées dans ladite chaine de bits par un bit égal à 1 et les autres ressources temps-fréquence par un bit égal à 0.

Dans cette quatrième variante de réalisation les équipements récepteurs identifient de manière simple et rapide qu'elles sont les ressources temps-fréquence utilisées pour la diffusion du message par l'équipement émetteur. Dans cette variante de réalisation, les équipements récepteurs peuvent identifier dès la première diffusion du message quelle ressource temps-fréquence est utilisée pour la deuxième diffusion du message par l'équipement émetteur de sorte à pouvoir traiter les données reçues lors des deux diffusions du message de manière conjointe.

Dans une cinquième variante de réalisation du procédé de diffusion, les informations relatives aux ressources temps-fréquence utilisées pour la diffusion dudit message étant distinctes lors de la première et de la deuxième diffusion dudit message, les informations relatives aux ressources temps-fréquence comprises dans le message lors de la première diffusion comprennent un index identifiant un premier couple constitué de la première ressource temps-fréquence et la deuxième ressource temps-fréquence sélectionnées, et les informations relatives aux ressources temps-fréquence comprises dans le message lors de la deuxième diffusion comprennent un index identifiant un deuxième couple constitué de la deuxième ressource temps-fréquence et la première ressource temps-fréquence sélectionnées.

Dans cette cinquième variante de réalisation, l'équipement émetteur identifie les ressources temps-fréquence utilisées pour la diffusion du message au moyen d'un index pointant vers une table regroupant les différentes combinaisons de ressources temps-fréquence possibles.

La transmission d'un index identifiant les ressources temps-fréquence utilisées permet de limiter le volume des données de contrôle transmises par l'équipement émetteur à destination des équipements récepteurs sachant que les tables regroupant les différentes combinaisons de ressources temps-fréquence sont transmises aux équipements appartenant au groupe de diffusion par la station de base.

L'invention concerne également un procédé de réception d'au moins un message diffusé au sein d'un groupe de diffusion comprenant une pluralité d'équipements récepteurs et un équipement émetteur, le procédé de réception étant mis en œuvre par au moins un équipement récepteur et comprenant les étapes suivantes de :

- réception d'un premier message émis par une station de base d'un réseau de communication radio à laquelle l'ensemble des équipements appartenant au groupe de diffusion sont attachés, comprenant des paramètres identifiant des ressources temps-fréquence d'un pool de ressources temps-fréquence utilisées lors de la diffusion dudit message,
- réception, dans une première ressource temps-fréquence, dudit message diffusé,
- réception, dans une deuxième ressource temps-fréquence, dudit message diffusé,
- traitement des données contenues dans le message diffusé, ledit traitement des données consistant à combiner les données contenues dans le message diffusé et décoder les données ainsi combinées.

Combiner les données reçues au cours des différentes diffusions du message permet de réduite le rapport signal sur bruit et ainsi améliorer la qualité des signaux reçus.

Dans une première variante du procédé de réception, le message diffusé à destination des équipements récepteurs du groupe de diffusion comprenant des informations relatives aux ressources temps-fréquence utilisées pour la diffusion dudit message, le procédé comprend en outre :

- une étape de comparaison des informations relatives aux ressources temps-fréquence utilisées pour la diffusion dudit message,
- lorsque les informations relatives aux ressources temps-fréquence utilisées pour la diffusion dudit message reçues lors la première diffusion et lors de la deuxième diffusion correspondent, une étape de combinaison des données contenues dans le message et reçues lors la première diffusion et lors de la deuxième diffusion dudit message.

Lorsque, pour une raison quelconque, les informations relatives aux ressources temps-fréquence utilisées pour la diffusion du message ne correspondent pas, les données contenues dans le message ne sont pas combinées et sont traitées comme si elles étaient comprises dans deux messages différents.

Dans une deuxième variante du procédé de réception, les informations relatives aux ressources temps-fréquence utilisées pour la diffusion dudit message sont identiques lors de la première et de la deuxième diffusion dudit message et comprennent une chaine de bits identifiants les ressources temps-fréquence dudit pool de ressources temps-fréquence dans laquelle la première ressource temps-fréquence et la deuxième ressource temps-fréquence sélectionnées sont représentées par un bit égal à 1 et les autres ressources temps-fréquence par un bit égal à 0.

Dans une troisième variante du procédé de réception, les informations relatives aux ressources temps-fréquence utilisées pour la diffusion dudit message étant distinctes lors de la première et de la deuxième diffusion dudit message, les informations relatives aux ressources temps-fréquence comprises dans le message lors de la première diffusion comprennent un index identifiant la première ressource temps-fréquence et la deuxième ressource temps-fréquence sélectionnées, et les informations relatives aux ressources temps-fréquence comprises dans le message lors de la deuxième diffusion comprennent un index identifiant la deuxième ressource temps-fréquence et la première ressource temps-fréquence sélectionnées.

L'invention concerne encore un procédé d'émission d'au moins un premier message au sein d'un pool de diffusion comprenant une pluralité d'équipements récepteurs et un équipement émetteur, le procédé d'émission étant mis en œuvre par une station de base d'un réseau de communication radio à laquelle l'ensemble des équipements appartenant au groupe de diffusion sont attachés et comprenant les étapes suivantes de :

- découpe d'un pool de ressources temps-fréquence en une pluralité de ressources temps-fréquence à utiliser pour la diffusion, par l'équipement émetteur, d'au moins un second message au sein dudit groupe de diffusion,
- émission dudit premier message comprenant des paramètres identifiant lesdites ressources temps-fréquence à utiliser pour la diffusion dudit deuxième message au sein dudit groupe de diffusion.

Selon une variante du procédé d'émission objet de l'invention, les paramètres identifiants les ressources temps-fréquence comprises dans le deuxième message destiné à être diffusé comprenant un index identifiant les ressources temps-fréquence sélectionnées, le premier message comprend en outre au moins une table de correspondance permettant l'identification des ressources temps-fréquence sélectionnées au moyen dudit index.

L'invention a également pour objet un équipement émetteur apte à diffuser au moins un message à destination d'une pluralité d'équipements récepteurs appartenant à un groupe de diffusion, l'équipement émetteur comprenant des moyens pour :

- recevoir un premier message émis par une station de base d'un réseau de communication radio à laquelle l'ensemble des équipements appartenant au groupe de diffusion sont attachés, comprenant des paramètres identifiant des ressources temps-fréquence d'un pool de ressources temps-fréquence à utiliser pour diffuser ledit message,

- sélectionner une première ressource temps-fréquence dans ledit pool de ressources temps-fréquence,
- sélectionner au moins une deuxième ressource temps-fréquence dans un sous-ensemble des ressources temps-fréquence dudit pool de ressources temps-fréquence,
- diffuser ledit message à destination des équipements récepteurs du groupe de diffusion, une première fois en utilisant la première ressource temps-fréquence sélectionnée et au moins une deuxième fois en utilisant la deuxième ressource temps-fréquence sélectionnée.

Un autre objet de l'invention concerne encore un équipement récepteur d'au moins un message diffusé au sein d'un groupe de diffusion comprenant une pluralité d'équipements récepteurs et un équipement émetteur, l'équipement récepteur comprenant des moyens pour :

- recevoir un premier message émis par une station de base d'un réseau de communication radio à laquelle l'ensemble des équipements appartenant au groupe de diffusion sont attachés, comprenant des paramètres identifiant des ressources temps-fréquence d'un pool de ressources temps-fréquence utilisées lors de la diffusion ledit message,
- recevoir, dans une première ressource temps-fréquence, dudit message diffusé,
- recevoir, dans une deuxième ressource temps-fréquence, dudit message diffusé,
- traiter des données contenues dans le message diffusé, en combinant les données contenues dans le message diffusé et en décodant les données ainsi combinées.

L'invention concerne encore une station de base d'un réseau de communication radio à laquelle un ensemble d'équipements récepteurs et un équipement émetteur appartenant à un groupe de diffusion sont attachés, ladite station de base étant apte à émettre au moins un message au sein du groupe de diffusion et comprenant des moyens pour :

- découper un pool de ressources temps-fréquence en une pluralité de ressources temps-fréquence à utiliser pour la diffusion, par l'équipement émetteur, d'au moins un premier message au sein dudit groupe de diffusion,
- émettre ledit message comprenant des paramètres identifiant lesdites ressources temps-fréquence au sein dudit groupe de diffusion.

L'invention concerne enfin un produit programme d'ordinateur comprenant des instructions de code de programme pour la mise en œuvre d'un procédé tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé objet de l'invention précité.

Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :

[fig. 1] : cette figure représente un système V2X dans lequel l'invention est implémentée,

[fig. 2] : cette figure représente un diagramme des échanges intervenant entre la station de base et les équipements utilisateurs dans un mode de réalisation général de l'invention,

[fig. 3] : cette figure représente une organisation du pool de ressources temps-fréquence selon un premier mode de réalisation de l'invention,

[fig. 4] : cette figure représente pool de ressource temps-fréquence divisé selon un deuxième de réalisation de l'invention,

[fig. 5] : cette figure représente une chaine de bits identifiant des ressources temps-fréquence sélectionnées par un équipement émetteur,

[fig. 6] : cette figure représente une table de combinaisons de ressources temps-fréquence sélectionnées par un équipement émetteur et une liste d'index associés,

[fig. 7] : cette figure représente un équipement utilisateur selon un mode de réalisation de l'invention.

## Description détaillée de modes de réalisation de l'invention

Le principe général de l'invention repose sur le découpage d'un pool de ressources temps-fréquence utilisées pour la diffusion de données au sein d'un groupe de diffusion comprenant une pluralité d'équipements récepteurs et un équipement émetteur afin de réduire le temps de latence lié à la sélection, par l'équipement émetteur, des ressources temps-fréquence à utiliser pur diffuser un message. Dans la suite du document, des exemples d'implémentations de la solution objet de l'invention sont décrits en lien avec un système V2X, mais l'invention peut s'appliquer dans d'autres contextes. De manière plus générale, l'invention peut s'appliquer dans tout système de diffusion de groupe ou *« groupcast »* pour lesquels il est intéressant de réduite le temps de latence.

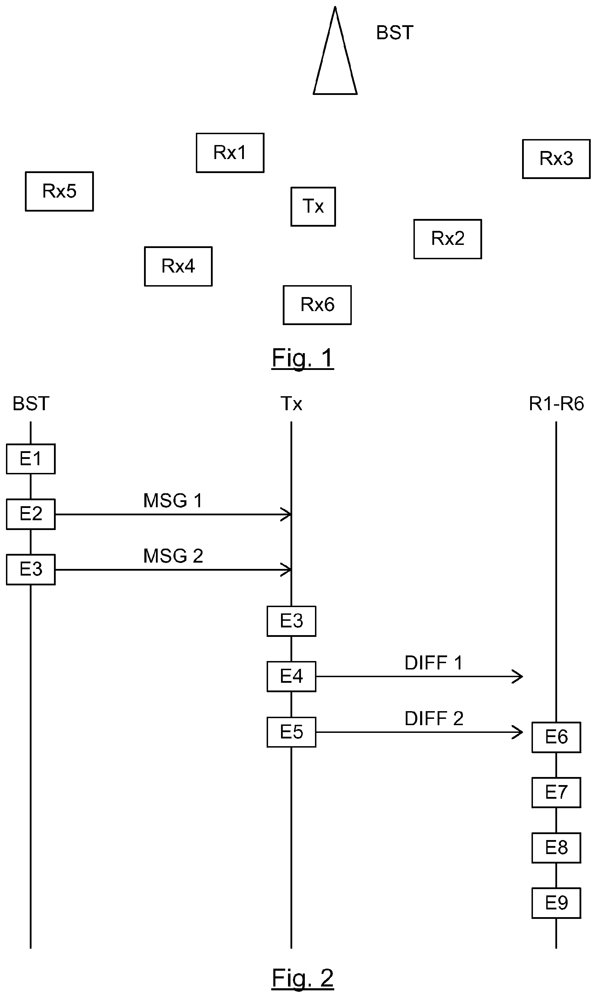

On présente désormais, en relation avec la **[fig. 1]** un système V2X dans lequel l'invention est implémentée.

Un tel système comprend une station de base BST, à laquelle est attachée une pluralité d'équipements utilisateurs Tx et Rx1-Rx6. Les équipements utilisateurs Tx et Rx1-Rx6 sont par exemple des terminaux mobiles embarqués dans des véhicules.

Les équipements utilisateurs Tx et Rx1-Rx6 sont attachés à la station de base BST et communiquent directement et individuellement avec elle au travers d'un canal de communication appelé *"Uu"* dans les spécifications 3GPP RAN.

Les équipements utilisateurs se répartissent en deux catégories : un équipement émetteur Tx capable de diffuser des données et des équipements récepteurs Rx1-Rx6 capables de recevoir des données diffusées par un équipement émetteur Tx. Dans un mode de réalisation de l'invention, les équipements utilisateurs Tx et Rx1-Rx6 sont capables de diffuser et de recevoir des données en fonction des besoins.

La **[fig. 2]** représente un diagramme des échanges intervenant entre la station de base BST et les équipements utilisateurs Tx et Rx1-Rx6 dans un mode de réalisation général de l'invention.

Dans une première étape E1, la station de base BST divise un ou plusieurs pools de ressources temps-fréquence d'un signal radio transportant des données au travers du canal de communication SL, en une pluralité de ressources temps-fréquence destinées à être utilisées par les différents équipements Tx, Rx1-Rx6 afin de diffuser des messages à destination les uns des autres. Chaque ressource temps-fréquence est identifiée par un couple instant-fréquence. Dans la suite du document, la station de base BST ne met qu'un seul pool de ressource temps-fréquence à disposition des équipements utilisateurs Tx, Rx1-Rx6. Lorsque plusieurs pools de ressources sont mis à disposition des équipements utilisateurs Tx, Rx1-Rx6 par la station de base BST, les équipements utilisateurs Tx, Rx1-Rx6 ne sélectionnent pas les ressources temps-fréquence qu'ils utilisent pour diffuser des messages au sein du groupe de diffusion dans plusieurs pools de ressources temps-fréquence ; les ressources temps-fréquence utilisées pour la diffusion d'un même message au sein du groupe de diffusion sont sélectionnées dan un même pool de ressource temps-fréquence.

Au cours d'une étape E2, la station de base BST émet un message MSG1 à destination de l'équipement émetteur Tx. Le message MSG1 comprend un identifiant du pool de ressources temps-fréquence mis à disposition des équipements utilisateurs Tx, Rx1-Rx6.

Au cours d'une étape E3, la station de base BST émet un message MSG2 à destination des équipements récepteurs Rx1-Rx6. Le message MSG2 comprend l'identifiant du pool de ressources temps-fréquence mis à disposition des équipements utilisateurs Tx, Rx1-Rx6.

Les données échangées entre la station de base BST et les équipements utilisateurs Tx et Rx1-Rx6 au cours des étapes E1 et E2 sont transmises au travers du canal de communication Uu.

Dans une étape E3, l'équipement émetteur Tx sélectionne de manière aléatoire au moins une première ressource temps-fréquence R1 dans le pool de ressource temps-fréquence identifié dans le message MSG1 émit par la station de base BST. La ressource temps-fréquence R1 ou les ressources temps-fréquence ainsi sélectionnées par l'équipement émetteur Tx sont utilisées pour la diffusion de données à destination des équipements récepteurs R1-R6.

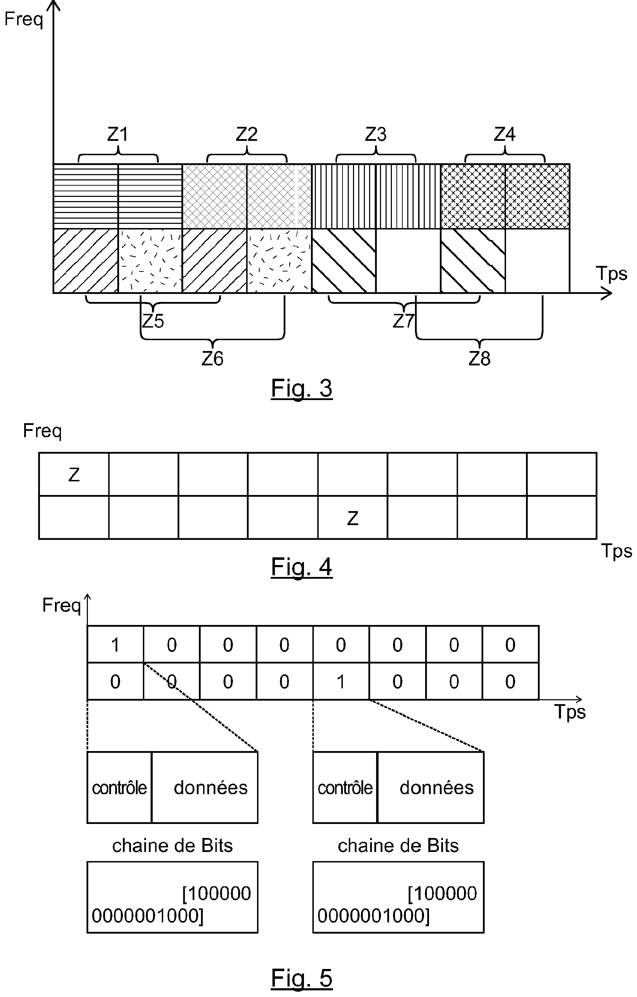

Dans un premier mode de réalisation de l'invention, la station de base BST regroupe les ressources temps-fréquence du pool de ressources temps-fréquence en une pluralité de sous-ensembles, ou zones de ressources, comprenant chacun N ressources temps-fréquence, N étant un entier naturel. Une telle organisation du pool de ressources temps-fréquence est représentée à la **[fig. 3].** Sur cette figure, huit zones de ressources Z1 à Z8 sont représentées, chacune de ces zones comprenant N=2 ressources temps-fréquence. Ces huit zones de ressources temps-fréquence Z1 à Z8 peuvent présenter des motifs différents en fonction de la manière dont la station de base BST a organisé le pool de ressources temps-fréquence. En choisissant la première ressource temps-fréquence R1, l'équipement émetteur Tx se voit attribuer au moins une deuxième ressource temps-fréquence R2.

Ainsi, les zones Z1 à Z4 sont constituées en blocs, c'est-à-dire que les ressources temps-fréquence les constituant se sont identifiées par des instants qui se suivent directement; alors que les zones Z5 à Z6 sont constituées par des ressources temps-fréquence entrelacées. Lors de la division du pool de ressources temps-fréquence en zones de ressources, la station de base BST doit respecter une contrainte selon laquelle au moins deux des N ressources temps-fréquence constitutives d'une même zone de ressources sont identifiées par des instants distincts. Cette contrainte permet de prendre en compte la spécificité les équipements utilisateurs Tx, R1-R6 qui sont des équipements communiquant entre eux en mode bidirectionnel à l'alternat.

Ainsi, en contraignant au moins deux ressources temps-fréquence d'une même zone de ressources à être identifiées par des instants distincts, la station de base s'assure que quelque soit la ressource temps-fréquence sélectionnée par l'équipement émetteur Tx, ce dernier est assuré de pouvoir recevoir des données émises par les équipements récepteurs R1-R6 puisque ces derniers ne pourront sélectionner au sein du pool de ressource temps-fréquence que des ressources temps-fréquence étant identifiées par des instants distincts.

Le risque de collision entre deux équipements utilisateurs Tx, R1-R6, c'est-à-dire le risque que deux équipements utilisateurs Tx, R1-R6 sélectionnent une même ressource temps-fréquence est calculé de la manière suivante : $P_C = 1 - \frac{\prod_{i=0}^{M-1}(N-i)}{N^M}$ , où N représente le nombre de total de ressources temps-fréquence, et *M* le nombre d'équipements utilisateurs Tx, R1-R6. Dans un premier exemple où *N*=8 et *M* =2, la probabilité de collision est de 12,5%. Dans le cas où *M*=4, la probabilité de collision augmente et est de 59%. Ces valeurs de probabilités de collision sont liées au fait que les motifs des zones de ressources sont prédéfinis par la station de base BST et ne peuvent être modifiés.

Afin de réduire la valeur de la probabilité de collision, dans un deuxième mode de réalisation de l'invention, la station de base BST autorise l'équipement émetteur Tx a sélectionner de manière aléatoire au moins deux ressources temps-fréquence R1 et R2 dans le pool de ressources temps-fréquence à la seule condition qu'au mois deux des ressources temps-fréquence sélectionnées soient identifiées par des instants distincts. Une telle organisation du pool de ressources temps-fréquence est représentée à la **[fig. 4]**. L'ensemble des ressources temps-fréquence sélectionnées par l'équipement émetteur Tx constitue alors une zone de ressources Z.

Le pool de ressource temps-fréquence représenté à la **[fig. 4]** est constitué de 16 ressources temps-fréquence et une zone de ressources comprend deux ressources temps-fréquence, il y a donc $C_{14}^2 = 104$ zones de ressources possibles. En effet, on considère qu'une fois la première ressource temps-fréquence sélectionnée parmi les 16 ressources temps-fréquence du pool de ressource temps-fréquence, la deuxième ressource à sélectionner ne peut être sélectionnée que parmi les 14 ressources temps-fréquence restantes car la première ressource sélectionnée ne peut être sélectionnée à nouveau et qu'aucune ressource identifiée par le même instant que la première ressource sélectionnée ne peut être sélectionnée. Dans le cas où N=8 et M =4, la probabilité de collision passe de 59% dans le premier mode de réalisation à 5,7% dans ce deuxième mode de réalisation.

Dans une étape E4, l'équipement émetteur Tx diffuse, en utilisant la première ressource temps-fréquence R1 sélectionnée, un message DIFF1 à destination des équipements récepteurs R1-R6. Le message DIFF1 comprend des données de contrôle et des données utiles ou « *payload* ». Les données de contrôle comprennent notamment des données relatives à la modulation et au schéma de codage appliqués aux données utiles.

Dans une étape E5, l'équipement émetteur Tx diffuse, en utilisant la deuxième ressource temps-fréquence R2 sélectionnée, un message DIFF2 à destination des équipements récepteurs R1-R6. Le message DIFF2 comprend des données de contrôle qui lui sont propres et les mêmes données utiles ou « *payload* » que les données utiles comprises dans le message DIFF1. Les données de contrôle comprennent notamment des données relatives à la modulation et au schéma de codage appliqués aux données utiles.

Afin de permettre aux équipements récepteurs R1-R6 de combiner les données comprises dans les deux messages DIFF1 et DIFF2 et d'ainsi réduire le rapport signal sur bruit et améliorer la qualité des signaux reçus, les données de contrôle des messages DIFF1 et DIFF2 comprennent en outre des informations permettant d'identifier les ressources temps-fréquence R1 et R2 utilisées par l'équipement émetteur Tx pour diffuser le message DIFF1 et un message DIFF2.

Dans une première implémentation, les informations permettant d'identifier les ressources temps-fréquence R1 et R2 consistent en une chaine de bits identifiants les ressources temps-fréquence du pool de ressources temps-fréquence dans laquelle la première ressource temps-fréquence R1 et la deuxième ressource temps-fréquence R2 sélectionnées sont représentées par un bit égal à 1 et les autres ressources temps-fréquence par un bit égal à 0. Une telle chaine de bits est représentée à la **[fig. 5]**.

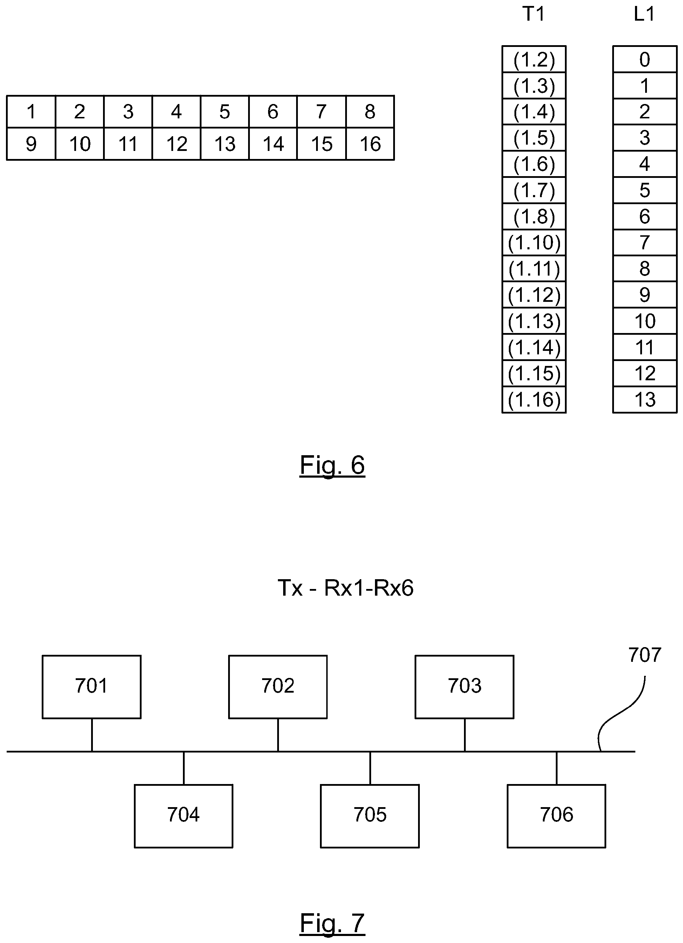

Dans une deuxième implémentation représentée à la figure **[fig. 6],** les informations permettant d'identifier les ressources temps-fréquence R1 et R2 consistent en un index identifiant le couple de ressources temps-fréquence R1 et R2 sélectionnées par l'équipement émetteur Tx.

Dans cette deuxième implémentation, une liste de toutes les combinaisons de ressources temps-fréquence possibles est générée pour chaque ressource temps-fréquence. Ainsi, lorsque l'équipement émetteur Tx sélectionne la première ressource temps-fréquence 1 du pool de ressource temps-fréquence comme première ressource temps-fréquence R1, les 14 combinaisons possibles de ressources temps-fréquence sont listées dans le tableau T1 et chaque combinaison de ressources temps-fréquence ointe vers un index d'une liste d'index L1 associée. Dans l'exemple représenté à la **[fig. 6],** l'équipement émetteur Tx sélectionne la treizième ressource temps-fréquence 13 du pool de ressource temps-fréquence comme deuxième ressource temps-fréquence R2.

Dans cet exemple, les données de contrôle du message DIFF1 comprennent l'index 10 de la liste d'index L1 qui permet aux équipements récepteurs R1-R6 d'identifier les ressources temps-fréquence R1 et R2 utilisées par l'équipement émetteur Tx pour diffuser le message DIFF1 et le message DIFF2.

Les données de contrôle du message DIFF2 comprennent un autre d'une autre liste d'index afin de permettre l'identification les ressources temps-fréquence R1 et R2 utilisées par l'équipement émetteur Tx pour diffuser le message DIFF1 et le message DIFF2. En effet, la ressource temps-fréquence utilisée pour la diffusion du message DIFF2 étant la ressource temps-fréquence R2, c'est la combinaison de ressources temps-fréquence (R2, R1) et donc l'index associé dans une liste d'index associée aux combinaisons de ressources temps-fréquence possibles lorsque la ressource temps-fréquence considérée est la treizième ressource temps-fréquence du pool de ressources temps-fréquence qui est transmis avec les données de contrôle.

Les tables de combinaisons et les listes d'index sont transmises aux équipements utilisateurs Tx, R1-R6 dans les messages MSG1 et MSG2 émis par la station de base au cours des étapes E2 et E3.

Cette deuxième implémentation permet de limiter la taille des données de contrôle en réduisant le nombre de bits nécessaires pour coder les informations permettant d'identifier les ressources temps-fréquence R1 et R2 utilisées par l'équipement émetteur Tx.

Dans une étape E6, à réception du message DIFF1, les équipements récepteurs R1-R6 identifient dans les données de contrôle les informations permettant d'identifier les ressources temps-fréquence R1 et R2 utilisées par l'équipement émetteur Tx, soit sous la forme d'une chaine de bit soit sous la forme d'index.

Dans une étape E7, à réception du message DIFF2, les équipements récepteurs R1-R6 identifient dans les données de contrôle les informations permettant d'identifier les ressources temps-fréquence R1 et R2 utilisées par l'équipement émetteur Tx, soit sous la forme d'une chaine de bit soit sous la forme d'index.

Dans une étape E8, les équipements récepteurs R1-R6 comparent les informations permettant d'identifier les ressources temps-fréquence R1 et R2 utilisées par l'équipement émetteur Tx extraites des données de contrôle des messages DIFF1 et DIFF2 afin de déterminer si elles correspondent. Si les informations permettant d'identifier les ressources temps-fréquence R1 et R2 utilisées par l'équipement émetteur Tx correspondent, alors les équipements récepteurs R1-R6 combinent les données utiles reçues dans les deux messages DIFF1 et DIFF2 et décodent les données ainsi combinées dans une étape E9.

Lorsque les informations permettant d'identifier les ressources temps-fréquence R1 et R2 utilisées par l'équipement émetteur Tx ne correspondent pas, les données utiles reçues dans les deux messages DIFF1 et DIFF2 sont traitées de manière indépendantes.

La **[fig. 7]** représente un équipement utilisateur Tx ou Rx1-Rx6 selon un mode de réalisation de l'invention. Un tel équipement utilisateur Tx ou Rx1-Rx6 est apte à mettre en œuvre les différents modes de réalisation du procédé décrits en référence aux figures 2-6.

Un équipement utilisateur Tx ou Rx1-Rx6 peut comprendre au moins un processeur matériel 701, une unité de stockage 702, un dispositif de saisie 703, un dispositif d'affichage 704, une interface 705, et au moins une interface de réseau 706 qui sont connectés entre eux au travers d'un bus 707. Bien entendu, les éléments constitutifs de l'équipement utilisateur Tx ou Rx1-Rx6 peuvent être connectés au moyen d'une connexion autre qu'un bus.

Le processeur 701 commande les opérations de l'équipement utilisateur Tx ou Rx1-Rx6. L'unité de stockage 702 stocke au moins un programme pour la mise en œuvre du procédé selon un mode de réalisation de l'invention à exécuter par le processeur 701, et diverses données, telles que des paramètres utilisés pour des calculs effectués par le processeur 701, des données intermédiaires de calculs effectués par le processeur 701, etc. Le processeur 701 peut être formé par tout matériel ou logiciel connu et approprié, ou par une combinaison de matériel et de logiciel. Par exemple, le processeur 701 peut être formé par un matériel dédié tel qu'un circuit de traitement, ou par une unité de traitement programmable telle qu'une unité centrale de traitement (*Central Processing Unit*) qui exécute un programme stocké dans une mémoire de celui-ci.

L'unité de stockage 702 peut être formée par n'importe quel moyen approprié capable de stocker le programme ou les programmes et des données d'une manière lisible par un ordinateur. Des exemples d'unité de stockage 702 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

Le dispositif de saisie 703 peut être formé par un clavier, un dispositif de pointage tel qu'une souris à utiliser par un utilisateur pour entrer des commandes. Le dispositif d'affichage 704 peut être également formé par un module d'affichage, tel que par exemple une interface graphique utilisateur ou GUI (pour *Graphical User Interface*).

L'interface 705 fournit une interface entre l'équipement utilisateur Tx ou Rx1-Rx6 et un autre équipement utilisateur Tx ou Rx1-Rx6 membre du même groupe de diffusion.

Au moins une interface réseau 706 fournit une connexion entre l'équipement utilisateur Tx ou Rx1-Rx6 et la station de base BST via une connexion radio.

## Revendications

1. Procédé de diffusion d'au moins un message au sein d'un groupe de diffusion comprenant une pluralité d'équipements récepteurs (Rx1-Rx6) et un équipement émetteur (Tx), le procédé de diffusion étant mis en œuvre par ledit équipement émetteur (Tx) et comprenant les étapes suivantes de :

    - réception d'un premier message émis par une station de base (BST) d'un réseau de communication radio à laquelle l'ensemble des équipements appartenant au groupe de diffusion sont attachés, comprenant des paramètres identifiant des ressources temps-fréquence d'un pool de ressources temps-fréquence pour diffuser ledit au moins un message,
    - sélection d'une première ressource temps-fréquence (R1) dans ledit pool de ressources temps-fréquence,
    - sélection d'au moins une deuxième ressource temps-fréquence (R2) dans un sous-ensemble des ressources temps-fréquence dudit pool de ressources temps-fréquence,
    - une première diffusion (DIFF1) dudit au moins un message comprenant des données utiles à destination des équipements récepteurs du groupe de diffusion, en utilisant la première ressource temps-fréquence (R1) sélectionnée et
    - au moins une deuxième diffusion (DIFF2) dudit au moins un message comprenant les mêmes données utiles en utilisant la deuxième ressource temps-fréquence (R2) sélectionnée

    ledit au moins un message diffusé à destination des équipements récepteurs du groupe de diffusion comprenant en outre des données de contrôle relatives aux ressources temps-fréquence utilisées pour la diffusion dudit au moins un message et les données utiles destinées à être traitées par les équipements récepteurs du groupe de diffusion, lesdites données de contrôle étant aptes à être comparées et lorsque les données de contrôle relatives aux ressources temps-fréquence utilisées pour la diffusion dudit au moins un message transmis lors la première diffusion (DIFF1) et lors de la deuxième diffusion (DIFF2) correspondent, les données utiles comprises dans le au moins un message transmises lors de la première diffusion (DIFF1) et lors de la deuxième diffusion (DIFF2) sont aptes à être combinées pour être décodées.

2. Procédé de diffusion selon la revendication 1 dans lequel, une ressource temps-fréquence étant identifiée par un couple instant-fréquence, ledit sous-ensemble des ressources temps-fréquence comprend en outre au moins la première ressource temps-fréquence et la deuxième ressource temps-fréquence est identifiée par un instant distinct d'un instant identifiant la première ressource temps-fréquence.

3. Procédé de diffusion selon la revendication 1 dans lequel, une ressource temps-fréquence étant identifiée par un couple instant-fréquence, la deuxième ressource temps-fréquence est identifiée par un instant distinct d'un instant identifiant la première ressource temps-fréquence sélectionnée.

4. Procédé de diffusion selon la revendication 1 dans lequel les données de contrôle relatives aux ressources temps-fréquence sélectionnées pour la diffusion dudit au moins un message sont identiques lors de la première et de la deuxième diffusion dudit au moins un message et comprennent une chaine de bits identifiants les ressources temps-fréquence dudit pool de ressources temps-fréquence, la première ressource temps-fréquence et la deuxième ressource temps-fréquence sélectionnées sont représentées dans ladite chaine de bits par un bit égal à 1 et les autres ressources temps-fréquence par un bit égal à 0.

5. Procédé de diffusion selon la revendication 1 dans lequel, les données de contrôle relatives aux ressources temps-fréquence sélectionnées pour la diffusion dudit au moins un message étant distinctes lors de la première et de la deuxième diffusion dudit au moins un message, les données de contrôle relatives aux ressources temps-fréquence comprises dans ledit au moins un message lors de la première diffusion comprennent un index identifiant un premier couple constitué de la première ressource temps-fréquence et de la deuxième ressource temps-fréquence sélectionnées, et les données de contrôle relatives aux ressources temps-fréquence comprises dans ledit au moins un message lors de la deuxième diffusion comprennent un index identifiant un deuxième couple constitué de la deuxième ressource temps-fréquence et de la première ressource temps-fréquence sélectionnées.

6. Procédé de réception d'au moins un message diffusé comprenant des données utiles au sein d'un groupe de diffusion comprenant une pluralité d'équipements récepteurs (Rx1-Rx6) et un équipement émetteur (Tx), le procédé de diffusion étant mis en œuvre par au moins un équipement récepteur (Rx1-Rx6) et comprenant les étapes suivantes de :

- réception d'un premier message émis par une station de base (BST) d'un réseau de communication radio à laquelle l'ensemble des équipements appartenant au groupe de diffusion sont attachés, comprenant des paramètres identifiant des ressources temps-fréquence d'un pool de ressources temps-fréquence pouvant être utilisées lors de la diffusion dudit au moins un message,
- réception, dans une première ressource temps-fréquence (R1) utilisée, dudit au moins un message diffusé lors d'une première diffusion (DIFF1),
- réception, dans une deuxième ressource temps-fréquence (R2) utilisée distincte en temps de la première ressource temps-fréquence (R1) utilisée, dudit au moins un message diffusé lors d'une deuxième diffusion (DIFF1),
- traitement des données utiles comprises dans ledit au moins un message diffusé à destination des équipements récepteurs du groupe de diffusion comprenant en outre des données de contrôle relatives aux ressources temps-fréquence utilisées pour la diffusion dudit au moins un message, le procédé comprenant en outre :
- une étape de comparaison des données de contrôle relatives aux ressources temps-fréquence utilisées pour la diffusion dudit au moins un message,
- lorsque les données de contrôle relatives aux ressources temps-fréquence utilisées pour la diffusion dudit au moins un message reçues lors la première diffusion (DIFF1) et lors de la deuxième diffusion (DIFF2) correspondent, le traitement des données consiste à combiner les données utiles comprises dans ledit au moins un message reçu lors la première diffusion (DIFF1) et lors de la deuxième diffusion (DIFF2) dudit au moins un message et à décoder les données combinées.

7. Procédé de réception selon la revendication 6 dans lequel les données de contrôle comprennent une chaine de bits identifiants les ressources temps-fréquence du pool, la première ressource temps-fréquence et la deuxième ressource temps-fréquence utilisées sont représentées dans ladite chaine de bits par un bit égal à 1 et les autres ressources temps-fréquence par un bit égal à 0.

8. Procédé de réception selon la revendication 6 dans lequel, ledit au moins un message diffusé à destination des équipements récepteurs du groupe de diffusion comprenant en outre des données de contrôle relatives aux ressources temps-fréquence utilisées pour la diffusion dudit au moins un message, le procédé comprend en outre :

- une étape de comparaison des données de contrôle relatives aux ressources temps-fréquence utilisées pour la diffusion dudit au moins un message,
- lorsque les données de contrôle relatives aux ressources temps-fréquence utilisées pour la diffusion dudit au moins un message reçues lors la première diffusion et lors de la deuxième diffusion sont distinctes les données utiles comprises dans ledit au moins un message reçu lors la première diffusion et dans ledit au moins un message reçu lors de la deuxième diffusion sont traitées et décodées indépendamment les unes des autres..

9. Procédé d'émission d'au moins un premier message au sein d'un groupe de diffusion comprenant une pluralité d'équipements récepteurs (Rx1-Rx6) et un équipement émetteur (Tx), le procédé de diffusion étant mis en œuvre par une station de base (BST) d'un réseau de communication radio à laquelle l'ensemble des équipements appartenant au groupe de diffusion sont attachés et comprenant les étapes suivantes de :

- découpe d'un pool de ressources temps-fréquence en une pluralité de ressources temps-fréquence pour la diffusion, par l'équipement émetteur, d'au moins un deuxième message au sein dudit groupe de diffusion,
- émission dudit premier message comprenant des paramètres identifiant lesdites ressources temps-fréquence (R1, R2) au sein dudit groupe de diffusion,

les paramètres identifiants les ressources temps-fréquence (R1, R2) comprises dans le deuxième message comprenant un index (10) identifiant les ressources temps-fréquence (R1, R2) sélectionnées pour la diffusion, le premier message comprenant en outre au moins une table de correspondance permettant l'identification des ressources temps-fréquence (R1, R2) sélectionnées au moyen dudit index (10).

10. Équipement émetteur apte à diffuser au moins un message comprenant des données utiles à destination d'une pluralité d'équipements récepteurs (Rx1-Rx6) appartenant à un groupe de diffusion, l'équipement émetteur (Tx) comprenant des moyens pour :

- recevoir un premier message émis par une station de base (BST) d'un réseau de communication radio à laquelle l'ensemble des équipements appartenant au pool de diffusion sont attachés, comprenant des paramètres identifiant des ressources temps-fréquence d'un pool de ressources temps-fréquence pour diffuser ledit au moins un message,

- sélectionner une première ressource temps-fréquence (R1) dans ledit pool de ressources temps-fréquence,
- sélectionner au moins une deuxième ressource temps-fréquence (R2) dans un sous-ensemble des ressources temps-fréquence dudit pool de ressources temps-fréquence,
- diffuser une première fois (DIFF1) ledit au moins un message comprenant les données utiles à destination des équipements récepteurs du groupe de diffusion, en utilisant la première ressource temps-fréquence sélectionnée et
- diffuser au moins une deuxième fois (DIFF2) ledit au moins un message comprenant les mêmes données utiles en utilisant la deuxième ressource temps-fréquence sélectionnée,

ledit au moins un message diffusé à destination des équipements récepteurs du groupe de diffusion comprenant en outre des données de contrôle relatives aux ressources temps-fréquence utilisées pour la diffusion dudit au moins un message et les données utiles destinées à être traitées par les équipements récepteurs du groupe de diffusion, lesdites données de contrôle étant aptes à être comparées et lorsque les données de contrôle relatives aux ressources temps-fréquence utilisées pour la diffusion dudit au moins un message transmis lors la première diffusion (DIFF1) et lors de la deuxième diffusion (DIFF2) correspondent, les données utiles comprises dans ledit au moins un message transmises lors de la première diffusion (DIFF1) et lors de la deuxième diffusion (DIFF2) sont aptes à être combinées pour être décodées.

**11.** Équipement récepteur d'au moins un message diffusé comprenant des données utiles au sein d'un groupe de diffusion comprenant une pluralité d'équipements récepteurs (Rx1-Rx6) et un équipement émetteur (Tx), l'équipement récepteur (Rx1-Rx6) comprenant des moyens pour:

- recevoir un premier message émis par une station de base (BST) d'un réseau de communication radio à laquelle l'ensemble des équipements appartenant au groupe de diffusion sont attachés, comprenant des paramètres identifiant des ressources temps-fréquence d'un pool de ressources temps-fréquence pouvant être utilisées lors de la diffusion dudit au moins un message,
- recevoir, dans une première ressource temps-fréquence (R1) utilisée, ledit au moins un message diffusé lors d'une première diffusion (DIFF1),
- recevoir, dans une deuxième ressource temps-fréquence (R2) utilisée distincte en temps de la première ressource temps-fréquence utilisée, ledit au moins un message diffusé lors d'une deuxième diffusion (DIFF2),
- traiter les données utiles comprises dans ledit au moins un message diffusé, en combinant les données contenues dans ledit au moins un message diffusé et en décodant les données ainsi combinées,

ledit au moins un message diffusé à destination des équipements récepteurs du groupe de diffusion comprenant en outre des données de contrôle relatives aux ressources temps-fréquence utilisées pour la diffusion dudit au moins un message, l'équipement récepteur comprenant en outre des moyens pour :

- comparer les données de contrôle relatives aux ressources temps-fréquence utilisées pour la diffusion dudit au moins un message,
- lorsque les données de contrôle relatives aux ressources temps-fréquence utilisées pour la diffusion dudit au moins un message reçues lors la première diffusion (DIFF1) et lors de la deuxième diffusion (DIFF2) correspondent, un traitement des données consistant à combiner les données utiles comprises dans le au moins un message reçu lors la première diffusion et lors de la deuxième diffusion dudit au moins un message et à décoder les données combinées.

**12.** Station de base d'un réseau de communication radio à laquelle un ensemble d'équipements récepteurs (Rx1-Rx6) et un équipement émetteur (Tx) appartenant à un groupe de diffusion sont attachés, ladite station de base (BST) étant apte à émettre au moins un premier message au sein du groupe de diffusion et comprenant des moyens pour :

- découper un pool de ressources temps-fréquence en une pluralité de ressources temps-fréquence (R1, R2) pour la diffusion, par l'équipement émetteur (Tx), d'au moins un deuxième message au sein dudit groupe de diffusion,
- émettre ledit premier message comprenant des paramètres identifiants lesdites ressources temps-fréquence au sein dudit groupe de diffusion,

les paramètres identifiants les ressources temps-fréquence (R1, R2) comprises dans le deuxième message comprenant un index (10) identifiant les ressources temps-fréquence (R1, R2) sélectionnées pour la diffusion, le premier message comprenant en outre au moins une table de correspondance permettant l'identification des ressources temps-fréquence (R1, R2) sélectionnées au moyen dudit index (10).

13. Produit programme d'ordinateur comprenant des instructions de code de programme pour la mise en œuvre d'un procédé selon les revendications 1 à 5, lorsqu'il est exécuté par un processeur.

**Patentansprüche**

1. Verfahren zum Rundsenden mindestens einer Nachricht innerhalb einer Rundsendegruppe, die eine Vielzahl von Empfangsgeräten (Rx1-Rx6) und ein Sendegerät (Tx) aufweist, wobei das Rundsendeverfahren von dem Sendegerät (Tx) durchgeführt wird und die folgenden Schritte aufweist:

- Empfangen einer ersten Nachricht, die von einer Basisstation (BST) eines Funkkommunikationsnetzes gesendet wird, an das alle zur Rundsendegruppe gehörenden Geräte angeschlossen sind, mit Parametern, die Zeit-Frequenz-Ressourcen eines Zeit-Frequenz-Ressourcenpools identifizieren, um die mindestens eine Nachricht rundzusenden,
- Auswählen einer ersten Zeit-Frequenz-Ressource (R1) aus dem Zeit-Frequenz-Ressourcenpool,
- Auswählen mindestens einer zweiten Zeit-Frequenz-Ressource (R2) aus einer Teilmenge der Zeit-Frequenz-Ressourcen des Zeit-Frequenz-Ressourcenpools,
- ein erstes Rundsenden (DIFF1) der mindestens einen Nachricht, die für die Empfangsgeräte der Rundsendegruppe nützliche Daten enthält, unter Verwendung der ausgewählten ersten Zeit-Frequenz-Ressource (R1) und
- mindestens ein zweites Rundsenden (DIFF2) der mindestens einen Nachricht mit denselben Nutzdaten unter Verwendung der ausgewählten zweiten Zeit-Frequenz-Ressource (R2),

wobei die mindestens eine Nachricht, die an die Empfangsgeräte der Rundsendegruppe rundgesendet wird, außerdem Steuerdaten bezüglich der Zeit-Frequenz-Ressourcen, die für die Rundsendung der mindestens einen Nachricht verwendet werden, und Nutzdaten enthält, die von den Empfangsgeräten der Rundsendegruppe verarbeitet werden sollen, wobei die Steuerdaten verglichen werden können und wenn die Steuerdaten, die sich auf die Zeit-Frequenz-Ressourcen beziehen, die für die Rundsendung der mindestens einen Nachricht verwendet werden, die bei der ersten Rundsendung (DIFF1) und bei der zweiten Rundsendung (DIFF2) übertragen wird, übereinstimmen, können die in der mindestens einen Nachricht enthaltenen Nutzdaten, die bei der ersten Rundsendung (DIFF1) und bei der zweiten Rundsendung (DIFF2) übertragen wurden, kombiniert werden, um decodiert zu werden.

2. Verfahren zum Rundsenden nach Anspruch 1, wobei eine Zeit-Frequenz-Ressource durch ein Zeit-Frequenz-Paar identifiziert wird, wobei die Teilmenge der Zeit-Frequenz-Ressourcen ferner mindestens die erste Zeit-Frequenz-Ressource aufweist und die zweite Zeit-Frequenz-Ressource durch einen Zeitpunkt identifiziert wird, der sich von einem Zeitpunkt unterscheidet, der die erste Zeit-Frequenz-Ressource identifiziert.

3. Verfahren zum Rundsenden nach Anspruch 1, wobei eine Zeit-Frequenz-Ressource durch ein Zeit-Frequenz-Paar identifiziert wird und die zweite Zeit-Frequenz-Ressource durch einen Zeitpunkt identifiziert wird, der sich von einem Zeitpunkt unterscheidet, der die ausgewählte erste Zeit-Frequenz-Ressource identifiziert.

4. Verfahren zum Rundsenden nach Anspruch 1, wobei die Steuerdaten bezüglich der für die Rundsendung der mindestens einen Nachricht ausgewählten Zeit-Frequenz-Ressourcen bei der ersten und zweiten Rundsendung der mindestens einen Nachricht identisch sind und eine Bitfolge aufweisen, die die Zeit-Frequenz-Ressourcen des Zeit-Frequenz-Ressourcenpools identifiziert, wobei die erste ausgewählte Zeit-Frequenz-Ressource und die zweite ausgewählte Zeit-Frequenz-Ressource in der genannten Bitfolge durch ein Bit gleich 1 dargestellt werden und die anderen Zeit-Frequenz-Ressourcen durch ein Bit gleich 0.

5. Verfahren zum Rundsenden nach Anspruch 1, wobei die Steuerdaten bezüglich der für die Rundsendung der mindestens einen Nachricht ausgewählten Zeit-Frequenz-Ressourcen bei der ersten und der zweiten Übertragung der mindestens einen Nachricht unterschiedlich sind, die Steuerdaten bezüglich der Zeit-Frequenz-Ressourcen, die in der mindestens einen Nachricht bei der ersten Rundsendung enthalten sind, einen Index aufweisen, der ein erstes Paar identifiziert, das aus der ersten ausgewählten Zeit-Frequenz-Ressource und der zweiten ausgewählten Zeit-Frequenz-Ressource besteht, und die Steuerdaten bezüglich der Zeit-Frequenz-Ressourcen, die in der mindestens einen Nachricht bei der zweiten Rundsendung enthalten sind, einen Index aufweisen, der ein zweites Paar identifiziert, das aus der zweiten ausgewählten Zeit-Frequenz-Ressource und der ersten ausgewählten Zeit-Frequenz-Ressource besteht.

6. Verfahren zum Empfangen mindestens einer rundgesendeten Nachricht mit Nutzdaten innerhalb einer Rundsendegruppe, die eine Vielzahl von Empfangsgeräten (Rx1-Rx6) und ein Sendegerät (Tx) aufweist, wobei das Rundsendeverfahren von mindestens einem Empfangsgerät (Rx1-Rx6) durchgeführt wird und die folgenden Schritte aufweist:

- Empfangen einer ersten Nachricht, die von einer Basisstation (BST) eines Funkkommunikationsnetzes gesendet wird, an das alle zur Rundsendegruppe gehörenden Geräte angeschlossen sind, mit Parametern, die Zeit-Frequenz-Ressourcen eines Zeit-Frequenz-Ressourcenpools identifizieren, die während der Rundsendung der mindestens eine Nachricht verwendet werden können,
- Empfangen der mindestens einen Nachricht, die bei einer ersten Rundsendung (DIFF1) rundgesendet wurde, in einer ersten verwendeten Zeit-Frequenz-Ressource (R1),
- Empfangen der mindestens einen Nachricht, die bei einer zweiten Rundsendung (DIFF1) rundgesendet wurde, in einer zweiten Zeit-Frequenz-Ressource (R2), die zeitlich getrennt von der ersten verwendeten Zeit-Frequenz-Ressource (R1) verwendet wird,
- Verarbeiten der in der mindestens einen Nachricht enthaltenen Nutzdaten, die an die Empfangsgeräte der Rundsendegruppe rundgesendet wird und außerdem Steuerdaten bezüglich der Zeit-Frequenz-Ressourcen enthält, die für die Rundsendung der mindestens einen Nachricht verwendet werden, wobei das Verfahren darüber hinaus Folgendes aufweist:
- einen Schritt zum Vergleichen der Steuerdaten bezüglich der Zeit-Frequenz-Ressourcen, die für die Rundsendung der mindestens einen Nachricht verwendet werden,
- wenn die bei der ersten Rundsendung (DIFF1) und bei der zweiten Rundsendung (DIFF2) empfangenen Steuerdaten bezüglich der für die Rundsendung der mindestens einen Nachricht verwendeten Zeit-Frequenz-Ressourcen übereinstimmen, besteht die Datenverarbeitung darin, die in der mindestens einen Nachricht enthaltenen Nutzdaten, die bei der ersten Rundsendung (DIFF1) und bei der zweiten Rundsendung (DIFF2) der mindestens einen Nachricht empfangen wurden, zu kombinieren und die kombinierten Daten zu decodieren.

**7.** Empfangsverfahren nach Anspruch 6, wobei die Steuerdaten eine Bitfolge aufweisen, die die Zeit-Frequenz-Ressourcen des Pools identifiziert, wobei die erste verwendete Zeit-Frequenz-Ressource und die zweite verwendete Zeit-Frequenz-Ressource in der Bitfolge durch ein Bit gleich 1 dargestellt werden und die anderen Zeit-Frequenz-Ressourcen durch ein Bit gleich 0.

**8.** Empfangsverfahren nach Anspruch 6, wobei die mindestens eine an die Empfangsgeräte der Rundsendegruppe rundgesendeten Nachricht außerdem Steuerdaten bezüglich der Zeit-Frequenz-Ressourcen enthält, die für die Rundsendung der mindestens einen Nachricht verwendet werden, wobei das Verfahren darüber hinaus Folgendes aufweist:

- einen Schritt zum Vergleichen der Steuerdaten bezüglich der Zeit-Frequenz-Ressourcen, die für die Rundsendung der mindestens einen Nachricht verwendet werden,
- wenn die Steuerdaten bezüglich der Zeit-Frequenz-Ressourcen, die für die Rundsendung der mindestens einen Nachricht verwendet werden und bei der ersten Rundsendung und bei der zweiten Rundsendung empfangen werden, unterschiedlich sind, werden die Nutzdaten, die in der mindestens einen bei der ersten Rundsendung empfangenen Nachricht und in der mindestens einen bei der zweiten Rundsendung empfangenen Nachricht enthalten sind, unabhängig voneinander verarbeitet und decodiert.

**9.** Verfahren zum Senden mindestens einer ersten Nachricht innerhalb einer Rundsendegruppe, die eine Vielzahl von Empfangsgeräten (Rx1-Rx6) und ein Sendegerät (Tx) aufweist, wobei das Verfahren zum Rundsenden von einer Basisstation (BST) eines Funkkommunikationsnetzes durchgeführt wird, an die alle zur Rundsendegruppe gehörenden Geräte angeschlossen sind, und die folgenden Schritte aufweist:

- Aufteilen eines Zeit-Frequenz-Ressourcenpools in eine Vielzahl von Zeit-Frequenz-Ressourcen für die Rundsendung mindestens einer zweiten Nachricht innerhalb der Rundsendegruppe durch das Sendegerät,
- Senden der ersten Nachricht mit Parametern, die die Zeit-Frequenz-Ressourcen (R1, R2) innerhalb der Rundsendegruppe identifizieren,

wobei die Parameter, die die in der zweiten Nachricht enthaltenen Zeit-Frequenz-Ressourcen (R1, R2) identifizieren, einen Index (10) aufweisen, der die für die Rundsendung ausgewählten Zeit-Frequenz-Ressourcen (R1, R2) identifiziert, wobei die erste Nachricht außerdem mindestens eine Zuordnungstabelle aufweist, die die Identifizierung der ausgewählten Zeit-Frequenz-Ressourcen (R1, R2) mittels des Index ermöglicht (10).

**10.** Sendegerät, das in der Lage ist, mindestens eine Nachricht mit Nutzdaten an eine Vielzahl von Empfangsgeräten (Rx1-Rx6) zu senden, die zu einer Rundsendegruppe gehören, wobei das Sendegerät (Tx) Mittel aufweist zum:

- Empfangen einer ersten Nachricht, die von einer Basisstation (BST) eines Funkkommunikationsnetzes gesendet wird, an das alle zum Rundsendepool gehörenden Geräte angeschlossen sind, mit Parametern, die Zeit-Frequenz-Ressourcen eines Zeit-Frequenz-Ressourcenpools identifizieren, um die mindestens eine Nachricht rundzusenden,
- Auswählen einer ersten Zeit-Frequenz-Ressource (R1) aus dem Zeit-Frequenz-Ressourcenpool,
- Auswählen mindestens einer zweiten Zeit-Frequenz-Ressource (R2) aus einer Teilmenge der Zeit-Frequenz-Ressourcen des Zeit-Frequenz-Ressourcenpools,
- ersten Rundsenden (DIFF1) der mindestens einen Nachricht, die für die Empfangsgeräte der Rundsendegruppe nützliche Daten enthält, unter Verwendung der ausgewählten ersten Zeit-Frequenz-Ressource und
- mindestens zweiten Rundsenden (DIFF2) der mindestens einen Nachricht mit denselben Nutzdaten unter Verwendung der ausgewählten zweiten Zeit-Frequenz-Ressource,

wobei die mindestens eine Nachricht, die an die Empfangsgeräte der Rundsendegruppe rundgesendet wird, außerdem Steuerdaten bezüglich der Zeit-Frequenz-Ressourcen, die für die Rundsendung der mindestens einen Nachricht verwendet werden, und Nutzdaten enthält, die von den Empfangsgeräten der Rundsendegruppe verarbeitet werden sollen, wobei die Steuerdaten verglichen werden können und wenn die Steuerdaten, die sich auf die Zeit-Frequenz-Ressourcen beziehen, die für die Rundsendung der mindestens einen Nachricht verwendet werden, die bei der ersten Rundsendung (DIFF1) und bei der zweiten Rundsendung (DIFF2) übertragen wird, übereinstimmen, können die in der mindestens einen Nachricht enthaltenen Nutzdaten, die bei der ersten Rundsendung (DIFF1) und bei der zweiten Rundsendung (DIFF2) übertragen wurden, kombiniert werden, um decodiert zu werden.

11. Empfangsgerät für mindestens eine rundgesendete Nachricht mit Nutzdaten innerhalb einer Rundsendegruppe, die eine Vielzahl von Empfangsgeräten (Rx1-Rx6) und ein Sendegerät (Tx) aufweist, wobei das Empfangsgerät (Rx1-Rx6) Mittel aufweist zum:

- Empfangen einer ersten Nachricht, die von einer Basisstation (BST) eines Funkkommunikationsnetzes gesendet wird, an das alle zur Rundsendegruppe gehörenden Geräte angeschlossen sind, mit Parametern, die Zeit-Frequenz-Ressourcen eines Zeit-Frequenz-Ressourcenpools identifizieren, die während der Rundsendung der mindestens eine Nachricht verwendet werden können,
- Empfangen der mindestens einen Nachricht, die bei einer ersten Rundsendung (DIFF1) rundgesendet wurde, in einer ersten verwendeten Zeit-Frequenz-Ressource (R1),
- Empfangen der mindestens einen Nachricht, die bei einer zweiten Rundsendung (DIFF2) rundgesendet wurde, in einer zweiten Zeit-Frequenz-Ressource (R2), die zeitlich getrennt von der ersten verwendeten Zeit-Frequenz-Ressource verwendet wird,
- Verarbeiten der in der mindestens einen rundgesendeten Nachricht enthaltenen Nutzdaten durch Kombinieren der in der mindestens einen rundgesendeten Nachricht enthaltenen Daten und Decodieren der so kombinierten Daten,

wobei die mindestens eine an die Empfangsgeräte der Rundsendegruppe gesendete Nachricht außerdem Steuerdaten bezüglich der Zeit-Frequenz-Ressourcen enthält, die für die Rundsendung der mindestens einen Nachricht verwendet werden, wobei das Empfangsgerät darüber hinaus Mittel aufweist zum:

- Vergleichen der Steuerdaten bezüglich der Zeit-Frequenz-Ressourcen, die für die Rundsendung der mindestens einen Nachricht verwendet werden,
- wenn die bei der ersten Rundsendung (DIFF1) und bei der zweiten Rundsendung (DIFF2) empfangenen Steuerdaten bezüglich der für die Rundsendung der mindestens einen Nachricht verwendeten Zeit-Frequenz-Ressourcen übereinstimmen, eine Datenverarbeitung darin besteht, die in der mindestens einen Nachricht enthaltenen Nutzdaten, die bei der ersten Rundsendung und bei der zweiten Rundsendung der mindestens einen Nachricht empfangen wurden, zu kombinieren und die kombinierten Daten zu decodieren.

12. Basisstation eines Funkkommunikationsnetzes, an die eine Gruppe von Empfangsgeräten (Rx1-Rx6) und ein Sendegerät (Tx) angeschlossen sind, die zu einer Rundsendegruppe gehören, wobei die Basisstation (BST) in der Lage ist, mindestens eine erste Nachricht innerhalb der Rundsendegruppe zu senden, und Mittel aufweist zum:

- Aufteilen eines Zeit-Frequenz-Ressourcenpools in eine Vielzahl von Zeit-Frequenz-Ressourcen (R1, R2) für die Rundsendung mindestens einer zweiten Nachricht innerhalb der Rundsendegruppe durch das Sendegerät (Tx),
- Senden der ersten Nachricht mit Parametern, die die Zeit-Frequenz-Ressourcen innerhalb der Rundsendegruppe identifizieren,

wobei die Parameter, die die in der zweiten Nachricht enthaltenen Zeit-Frequenz-Ressourcen (R1, R2) identifizieren, einen Index (10) aufweisen, der die für die Rundsendung ausgewählten Zeit-Frequenz-Ressourcen (R1, R2) identifiziert, wobei die erste Nachricht außerdem mindestens eine Zuordnungstabelle aufweist, die die Identifizierung der ausgewählten Zeit-Frequenz-Ressourcen (R1, R2) mittels des Index ermöglicht (10).

13. Computerprogrammprodukt, das Programmcodeanweisungen aufweist, die bei seiner Ausführung durch einen Prozessor das Verfahren nach den Ansprüchen 1 bis 5 durchführen.

**Claims**

1. Method of broadcasting at least one message in a broadcasting group comprising a plurality of receiver equipments (Rx1-Rx6) and an emitter equipment (Tx), the broadcasting method being implemented by said emitter equipment (Tx) and comprising the following steps:

   - receiving a first message emitted by a base station (BST) of a radio communication network to which all of the equipments belonging to the broadcasting group are attached, comprising parameters identifying time-frequency resources of a pool of time-frequency resources for broadcasting said at least one message,
   - selecting a first time-frequency resource (R1) in said pool of time-frequency resources,
   - selecting at least one second time-frequency resource (R2) in a subset of the time-frequency resources of said pool of time-frequency resources,
   - a first broadcasting (DIFF1) of said at least one message comprising useful data to the receiver equipments of the broadcasting group, by using the first time-frequency resource (R1) selected, and
   - at least one second broadcasting (DIFF2) of said at least one message comprising the same useful data by using the second time-frequency resource (R2) selected, said at least one message broadcast to the receiver equipments of the broadcasting group further comprising control data relative to the time-frequency resources used for the broadcasting of said at least one message and the useful data intended to be processed by the receiver equipments of the broadcasting group, said control data being comparable and when the control data relative to the time-frequency resources used for the broadcasting of said at least one message transmitted during the first broadcasting (DIFF1) and during the second broadcasting (DIFF2) correspond, the useful data comprised in the at least one message transmitted during the first broadcasting (DIFF1) and during the second broadcasting (DIFF2) are capable of being combined to be decoded.

2. Broadcasting method according to Claim 1, wherein, a time-frequency resource being identified by an instant-frequency pair, said subset of the time-frequency resources further comprises at least the first time-frequency resource and the second time-frequency resource is identified by an instant distinct from an instant identifying the first time-frequency resource.

3. Broadcasting method according to Claim 1, wherein, a time-frequency resource being identified by an instant-frequency pair, the second time-frequency resource is identified by an instant distinct from an instant identifying the first time-frequency resource selected.

4. Broadcasting method according to Claim 1, wherein the control data relative to the time-frequency resources selected for the broadcasting of said at least one message are identical during the first and the second broadcasting of said at least one message and comprise a string of bits identifying the time-frequency resources of said pool of time-frequency resources, the first time-frequency resource and the second time-frequency resource selected being represented in said string of bits by a bit equal to 1 and the other time-frequency resources by a bit equal to 0.

5. Broadcasting method according to Claim 1, wherein, the control data relative to the time-frequency resources selected for the broadcasting of said at least one message being distinct during the first and the second broadcasting of said at least one message, the control data relative to the time-frequency resources comprised in said at least one message during the first broadcasting comprise an index identifying a first pair consisting of the first time-frequency resource and the second time-frequency resource selected, and the control data relative to the time-frequency resources comprised in said at least one message during the second broadcasting comprise an index identifying a second pair consisting of the second time-frequency resource and the first time-frequency resource selected.

6. Reception method of receiving at least one broadcast message comprising useful data in a broadcasting group comprising a plurality of receiver equipments (Rx1-Rx6) and an emitter equipment (Tx), the broadcasting method being implemented by at least one receiver equipment (Rx1-Rx6) and comprising the following steps:

- receiving a first message emitted by a base station (BST) of a radio communication network to which all of the equipments belonging to the broadcasting group are attached, comprising parameters identifying time-frequency resources of a pool of time-frequency resources that can be used during the broadcasting of said at least one message,
- receiving, in a first time-frequency resource (R1) used, said at least one message broadcast during a first broadcasting (DIFF1),
- receiving, in a second time-frequency resource (R2) used distinct in time from the first time-frequency resource (R1) used, said at least one message broadcast during a second broadcasting (DIFF1),
- processing the useful data comprised in said at least one message broadcast to the receiver equipments of the broadcasting group, further comprising control data relative to the time-frequency resources used for the broadcasting of said at least one message, the method further comprising:
- a step of comparing the control data relative to the time-frequency resources used for the broadcasting of said at least one message,
- when the control data relative to the time-frequency resources used for the broadcasting of said at least one message received during the first broadcasting (DIFF1) and during the second broadcasting (DIFF2) correspond, the processing of the data involves combining the useful data comprised in said at least one message received during the first broadcasting (DIFF1) and during the second broadcasting (DIFF2) of said at least one message and decoding the combined data.

7. Reception method according to Claim 6, wherein the control data comprise a string of bits identifying the time-frequency resources of the pool, the first time-frequency resource and the second time-frequency resource used being represented in said string of bits by a bit equal to 1 and the other time-frequency resources by a bit equal to 0.

8. Reception method according to Claim 6, wherein, said at least one message broadcast to the receiver equipments of the broadcasting group further comprising control data relative to the time-frequency resources used for the broadcasting of said at least one message, the method further comprises:

- a step of comparing the control data relative to the time-frequency resources used for the broadcasting of said at least one message,
- when the control data relative to the time-frequency resources used for the broadcasting of said at least one message received during the first broadcasting and during the second broadcasting are distinct, the useful data comprised in said at least one message received during the first broadcasting and in said at least one message received during the second broadcasting are processed and decoded independently of each other.

9. Method of emitting at least a first message in a broadcasting group comprising a plurality of receiver equipments (Rx1-Rx6) and an emitter equipment (Tx), the emission method being implemented by a base station (BST) of a radio communication network to which all of the equipments belonging to the broadcasting group are attached and comprising the following steps:

- dividing a pool of time-frequency resources into a plurality of time-frequency resources for the broadcasting, by the emitter equipment, of at least a second message in said broadcasting group,
- emitting said first message comprising parameters identifying said time-frequency resources (R1, R2) in said broadcasting group,

the parameters identifying the time-frequency resources (R1, R2) comprised in the second message comprising an index (10) identifying the time-frequency resources (R1, R2) selected for the broadcasting, the first message further comprising at least one lookup table allowing the identification of the time-frequency resources (R1, R2) selected via said index (10).

10. Emitter equipment capable of broadcasting at least one message comprising useful data to a plurality of receiver equipments (Rx1-Rx6) belonging to a broadcasting group, the emitter equipment (Tx) comprising means for:

- receiving a first message emitted by a base station (BST) of a radio communication network to which all of the equipments belonging to the broadcasting pool are attached, comprising parameters identifying time-frequency resources of a pool of time-frequency resources for broadcasting said at least one message,
- selecting a first time-frequency resource (R1) in said pool of time-frequency resources,
- selecting at least one second time-frequency resource (R2) in a subset of the time-frequency resources of said pool of time-frequency resources,

- broadcasting said at least one message comprising the useful data to the receiver equipments of the broadcasting group a first time (DIFF1), by using the first time-frequency resource selected, and

- broadcasting said at least one message comprising the same useful data at least a second time (DIFF2) by using the second time-frequency resource selected,

said at least one message broadcast to the receiver equipments of the broadcasting group further comprising control data relative to the time-frequency resources used for the broadcasting of said at least one message and the useful data intended to be processed by the receiver equipments of the broadcasting group, said control data being comparable and when the control data relative to the time-frequency resources used for the broadcasting of said at least one message transmitted during the first broadcasting (DIFF1) and during the second broadcasting (DIFF2) correspond, the useful data comprised in said at least one message transmitted during the first broadcasting (DIFF1) and during the second broadcasting (DIFF2) are capable of being combined to be decoded.

11. Receiver equipment receiving at least one broadcast message comprising useful data in a broadcasting group comprising a plurality of receiver equipments (Rx1-Rx6) and an emitter equipment (Tx), the receiver equipment (Rx1-Rx6) comprising means for:

   - receiving a first message emitted by a base station (BST) of a radio communication network to which all of the equipments belonging to the broadcasting group are attached, comprising parameters identifying time-frequency resources of a pool of time-frequency resources that can be used during the broadcasting of said at least one message,
   - receiving, in a first time-frequency resource (R1) used, said at least one message broadcast during a first broadcasting (DIFF1),
   - receiving, in a second time-frequency resource (R2) used distinct in time from the first time-frequency resource used, said at least one message broadcast during a second broadcasting (DIFF2),
   - processing the useful data comprised in said at least one broadcast message, by combining the data contained in said at least one broadcast message and by decoding the data thus combined,

said at least one message broadcast to the receiver equipments of the broadcasting group further comprising control data relative to the time-frequency resources used for the broadcasting of said at least one message, the receiver equipment further comprising means for:

   - comparing the control data relative to the time-frequency resources used for the broadcasting of said at least one message,
   - when the control data relative to the time-frequency resources used for the broadcasting of said at least one message received during the first broadcasting (DIFF1) and during the second broadcasting (DIFF2) correspond, processing the data in a way involving combining the useful data comprised in the at least one message received during the first broadcasting and during the second broadcasting of said at least one message and decoding the combined data.

12. Base station of a radio communication network to which a set of receiver equipments (Rx1-Rx6) and an emitter equipment (Tx) belonging to a broadcasting group are attached, said base station (BST) being capable of emitting at least a first message in the broadcasting group and comprising means for:

   - dividing a pool of time-frequency resources into a plurality of time-frequency resources (R1, R2) for the broadcasting, by the emitter equipment (Tx), of at least a second message in said broadcasting group,
   - emitting said first message comprising parameters identifying said time-frequency resources in said broadcasting group,

the parameters identifying the time-frequency resources (R1, R2) comprised in the second message comprising an index (10) identifying the time-frequency resources (R1, R2) selected for the broadcasting, the first message further comprising at least one lookup table allowing the identification of the time-frequency resources (R1, R2) selected via said index (10).

13. Computer program product comprising program code instructions for implementing a method according to Claims 1 to 5, when it is executed by a processor.

Fig. 1

Fig. 2

Freq

Z1          Z2          Z3          Z4

Tps

Z5

Z6          Z7

Z8

Fig. 3

Freq

| Z |   |   |   |   |   |   |   |
|---|---|---|---|---|---|---|---|
|   |   |   |   | Z |   |   |   |

Tps

Fig. 4

Freq

| 1 | 0 | 0 | 0 | 0 | 0 | 0 | 0 |
|---|---|---|---|---|---|---|---|
| 0 | 0 | 0 | 0 | 1 | 0 | 0 | 0 |

Tps

| contrôle | données |
|----------|---------|

| contrôle | données |
|----------|---------|

chaine de Bits          chaine de Bits

[100000 0000001000]          [100000 0000001000]

Fig. 5

T1     L1

| T1 | | L1 |
|---|---|---|
| (1.2) | | 0 |
| (1.3) | | 1 |
| (1.4) | | 2 |
| (1.5) | | 3 |
| (1.6) | | 4 |
| (1.7) | | 5 |
| (1.8) | | 6 |
| (1.10) | | 7 |
| (1.11) | | 8 |
| (1.12) | | 9 |
| (1.13) | | 10 |
| (1.14) | | 11 |
| (1.15) | | 12 |
| (1.16) | | 13 |

| 1 | 2 | 3 | 4 | 5 | 6 | 7 | 8 |
|---|---|---|---|---|---|---|---|
| 9 | 10 | 11 | 12 | 13 | 14 | 15 | 16 |

Fig. 6

Tx - Rx1-Rx6

701     702     703     707

704     705     706

Fig. 7

**EP 3 935 898 B1**

**RÉFÉRENCES CITÉES DANS LA DESCRIPTION**

**Documents brevets cités dans la description**

- WO 2019022480 A1